## Europäisches Patentamt
## European Patent Office
## Office européen des brevets

(19)

(11) Numéro de publication: **0 085 013**
**A1**

## DEMANDE DE BREVET EUROPEEN

(12)

(21) Numéro de dépôt: 83400179.4

(22) Date de dépôt: 26.01.83

(51) Int. Cl.³: **G 08 G 1/09**

(30) Priorité: 26.01.82 FR 8201144

(43) Date de publication de la demande: 03.08.83
Bulletin 83/31

(84) Etats contractants désignés: **AT BE CH DE FR GB IT LI LU NL SE**

(71) Demandeur: **Serina, Robert, 17, rue Damrémont, F-75018 Paris (FR)**

(72) Inventeur: **Serina, Robert, 17, rue Damrémont, F-75018 Paris (FR)**

(74) Mandataire: **Rataboul, Michel, Cabinet Michel Rataboul 69, rue de Richelieu, F-75002 Paris (FR)**

(54) Procédé et dispositif pour la communication des embarras de la circulation à des usagers de véhicules.

(57) L'invention concerne les communications radio entre au-moins une station émettrice 1 et des récepteurs 5 installés dans des véhicules.

Elle est caractérisée en ce que l'on superpose à l'émission audible normale des signaux codés, de préférence inaudibles, qui sont captés par les antennes habituelles 4 puis décodés par des décodeurs 7 pour agir sur des interrupteurs 16 correspondant chacun à un organe d'éclairage 13 tel qu'une diode luminescente.

Le boîtier 12 qui reçoit les diodes 13 et les interrupteurs 16 reçoit un plan ou carte routière 15, munie de fenêtres 14 en regard des diodes 13 et à des emplacements qui correspondent à des endroits réels ou se produisent des embarras de la circulation.

La station 1 émet périodiquement les signaux codés qui tiennent à jour la situation indiquée par le tableau en allumant ou éteignant chaque diode concernée.

PROCEDE ET DISPOSITIF POUR LA COMMUNICATION DES EMBARRAS DE LA CIRCULATION A DES USAGERS DE VEHICULES.

La circulation automobile est très souvent perturbée par des embarras qui proviennent, par exemple, d'accidents, d'encombrements (de véhicules ou de piétons) ou de mauvaises conditions météorologiques telles que le brouillard ou la neige.

Les endroits auxquels se produisent ces embarras sont très généralement connus par avance puisqu'en général ils sont géographiquement favorables à la création de tels embarras.

Les conducteurs de véhicules pourraient souvent éviter l'endroit perturbé s'ils étaient prévenus en permanence de la survenance de ces embarras mais, actuellement, ces conducteurs ne sont pas prévenus à l'exception de véhicules très particuliers tels que les autobus des grandes villes qui sont équipés de radio-téléphones grâce auxquels une station centrale peut prévenir chaque conducteur de véhicule, à son bord.

Quant aux usagers de véhicules privés, s'ils disposent généralement d'un récepteur portatif ou d'un auto-radio, il est pratiquement impossible de consacrer une station émettrice à la diffusion permanente et répétitive des embarras qui surviennent dans une zone géographique donnée car il est clair que l'usager vite lassé d'écouter une telle énumération changera de longueur d'onde ou de canal.

C'est le cas notamment du document DOS 2.326.199 qui décrit un terminal installé dans un véhicule et faisant partie d'une chaîne comprenant une station centrale, des stations régionales et un récepteur spécial.

Comme cela est indiqué dans ce document, (page 4, lignes 25 et 26), il s'agit d'une installation spéciale qui n'émet que des signaux destinés à la commande des lampes puisqu'il n'est pas nécessaire d'allumer le récepteur de radio.

Cela est incompatible avec la présente invention qui prévoit que l'on peut ne pas bénéficier des signaux codés si l'on n'écoute pas simultanément une station émettant un programme courant.

En effet, l'invention se base sur l'hypothèse hautement probable qu'il est pratiquement impossible de consacrer une station émettrice à la diffusion permanente et répétitive des embarras qui surviennent dans une zone géographique donnée.

L'invention, au contraire, associe l'utile à l'agréable et prévoit cette incitation grâce au fait que l'on "efface" pour l'auditeur les informations qu'il devrait autrement mémoriser, tout en lui apportant la détente que lui procure l'écoute d'un programme attrayant et varié.

Le document DOS.2.326.199 ne décrit pas les mêmes éléments que ceux d'un dispositif conforme à l'invention.

Celui de l'invention est animé par deux émisssions distinctes (dont une est codée) mais qui restent combinées jusqu'à un ensemble de réception au sein duquel se fait leur différenciation et leur envoi pour l'une vers un haut-parleur et pour l'autre vers l'affichage purement visuel.

On connaît aussi le document DOS 3.022.761 qui décrit une installation comprenant un centre, des éléments fixes placés sur le réseau routier et des récepteurs à audio-restitution.

Il s'agit d'un complexe qui fonctionne en complète autonomie et qui ne prévoit aucune combinaison avec une émission de programmes variés et, peut-on dire, de fantaisie. On ne trouve dans ce document aucune allusion à l'incitation des usagers.

Au contraire, on peut souligner que l'usage d'un tel dispositif à audio-restitution empêche radicalement l'écoute d'un programme radiophonique de détente.

Dans le brevet français 2.476.951, est décrit un système vidéo qui comprend des mémoires, des multiplexeurs, des caméras et autres appareils électroniques. Il constitue un ensemble dont la complexité montre bien qu'il est étranger à la présente invention qui fait appel à une installation d'émission existante.

Selon le brevet français 2.456.982, un dispositif de réception comprend obligatoirement une mémoire afin de remédier aux inconvénients du système connu et qui résultent du fait que les informations de circulation n'atteignent que les personnes qui ont branché leur récepteur pendant l'émission des informations de circulation (page 1, lignes 10 à 14), ces informations étant transmises par interruption d'émissions en cours (page 1, lignes 4 à 6) c'est-à-dire phoniquement et en clair.

Ce brevet concerne par conséquent, un dispositif d'enregistrement de données phoniques en clair et leur restitution, plus tard, éventuellement après traduction dans une autre langue.

De toutes façons, même lorsque les informations sont restituées aussi visuellement par un appareil de télévision, il y a dissociation entre l'instant de l'émission et l'instant de la restitution, grâce à la mémoire.

La mémoire permet, notamment, à l'utilisateur de choisir arbitrairement le moment de la restitution et de sélectionner des informations.

On note que le dispositif décrit suppose que l'usager prend l'initiative de la commutation après enregistrement en mémoire, en agissant sur un clavier que comporte l'étage de commande 7.

Lorsque les informations sont restituées phoniquement, il est évident que cela empêche d'écouter l'émission radiophonique normale du moment: ou bien on doit écouter les deux sons à la fois, ou bien on doit interrompre l'émission radiophonique en éteignant le récepteur radio.

Pour capter les informations à un instant $i_1$ et les restituer à une instant $i_2$, il faut un étage de commutation programmable afin que celui-ci déclenche le récepteur et l'enregistreur à l'instant $i_1$ , hors de la présence de l'usager. S'il n'y avait pas un tel étage de commutation programmable, il faudrait que le récepteur et l'enregistreur soient en veille permanente, ce qui est difficile à envisager en pratique.

En outre, la passivité de la mémoire a pour conséquence qu'elle enregistre successivement toutes les informations, même contradictoires. Pour connaître la situation de l'ins-

tant $\frac{i}{-}2$, il faut écouter dans l'ordre chronologique toutes les informations enregistrées précédemment.

Si l'on veut éviter ce grave inconvénient, il est indispensable de programmer l'enregistreur pour ne mettre en mémoire que les informations les plus récentes par rapport à l'instant d'utilisation qui doit, donc, lui-même être prévu.

On remarque ainsi qu'il est indispensable de prévoir au moins une mémoire et au moins un commutateur programmable pour chaque récepteur.

D'une manière plus générale, on peut rappeler que, bien entendu, certaines stations donnent périodiquement des renseignements sur la circulation, mais ces renseignements sont relativement rares par rapport au programme de la station considérée et, surtout, il est très difficile de s'en souvenir du fait qu'ils sont relativement nombreux et qu'ils ne sont donnés que rarement.

La présente invention permet de remédier à ces inconvénients en mettant à la disposition des usagers de véhicules de toutes espèces un moyen d'être tenus informés en permanence des différents embarras d'une zone géographique donnée et cela en exposant en permanence à l'observation de l'usager des repères visuels grâce auxquels l'usager peut voir la situation d'un seul coup d'oeil, soit avant de monter dans son véhicule, soit à bord, puis de suivre directement l'évolution de cette situation au fur et à mesure des changements qui interviennent.

Selon l'invention, un procédé pour la communication radio entre au moins une station émettrice et une pluralité de récepteurs est du type selon lequel, pour signaler des embarras de la circulation existant à un certain moment dans une zone géographique donnée, on pré-détermine des endroits de cette zone susceptibles d'être particulièrement perturbés, on fait correspondre à ces endroits des repères visuels, notamment des organes d'éclairage tels que des diodes luminescentes, on ordonne ces repères sensiblement selon la disposition relative réelle de ces endroits et on les expose ainsi sélectivement à l'observation d'un usager

au voisinage de chaque récepteur, on combine ces repères avec une représentation en plan de ladite zone permettant à l'usager d'observer les repères visuels quand ils sont sélectivement exposés et est caractérisé en ce que l'on expose et l'on efface sélectivement chacun de ces repères visuels au moyen d'organes de commande individuels actionnés directement à partir de signaux radio qui sont émis par une station émettant en simultanéité avec une émission radio de programmes courants audibles, signaux qui sont codés en séquences correspondant chacune à l'actionnement d'un organe de commande pour, soit exposer, soit effacer un repère visuel donné et qui sont émis, de préférence selon des caractéristiques qui les rendent inaudibles par l'oreille humaine, en adjonction à l'émission radio courante qui, elle, est audible au moyen d'un récepteur radio.

Selon un mode de réalisation particulier de l'invention, on émet les programmes courants audibles à partir d'au moins un émetteur et l'on émet les signaux codés à partir d'un ou plusieurs autres émetteurs pouvant être localisés diversement selon leur puissance individuelle.

L'invention a également pour objet un dispositif pour la mise en oeuvre du procédé ci-dessus, caractérisé en ce qu'il comprend au moins une installation pour l'émission de programmes courants et au moins un codeur de signaux radio associé à l'installation.

Selon un mode de réalisation particulier, un dispositif conforme à l'invention comprend une pluralité d'ensembles composés chacun, d'une première part d'un récepteur radio, d'une deuxième part d'un écran d'affichage pour des repères visuels qui doivent être reliés chacun à une source d'énergie, qui sont associés à des organes de commandes individuels et qui sont combinés à un plan ou carte routière et, d'une troisième part, d'un décodeur des signaux radio qui est relié au récepteur, soit par un câble de raccordement auquel cas le récepteur peut être standard tel qu'un récepteur portatif, un auto-radio et analogue, soit par intégration dans un ensemble unitaire récepteur-décodeur.

Selon d'autres caractéristiques de l'invention :

- Le dispositif comprend au moins une installation pour l'émission de programmes courants et au moins une installation pour l'émission de signaux codés.

- Le dispositif comprend une pluralité d'ensembles composés chacun, d'une part d'un récepteur radio et, d'autre part, d'un écran d'affichage pour des repères visuels qui doivent être reliés chacun à une source d'énergie, qui sont associés à des organes de commande individuels et qui sont combinés à un plan ou carte routière, le récepteur radio comportant deux circuits distincts devant être accordés respectivement sur l'installation d'émission des programmes courants et sur l'une, au moins, des installations d'émission de signaux codés.

- Le circuit devant être accordé sur l'installation d'émission des programmes courants est accordé une fois pour toute sur l'unique fréquence d'émission de ladite installation.

- Le circuit devant être accordé sur l'installation d'émission des programmes courants comprend un étage de détection de type réglable permettant la réception d'émissions de diverses fréquences.

- L'étage de détection réglable possède une liaison avec une "porte" intercalée, sur le circuit devant être accordé sur l'une au moins des installations d'émission de signaux codés, entre un étage de réception et un étage de détection afin que la "porte" ne soit "ouverte", c'est-à-dire conductrice vers l'étage de détection, que si et quand l'étage de détection réglable est accordé sur la fréquence de l'installation d'émission des programmes courants, cette même porte étant au contraire "fermée", c'est-à-dire non conductrice, quand l'étage de détection réglable est accordé sur une fréquence autre que celle de l'installation d'émission des programmes courants.

- Le circuit devant être accordé sur l'une, au moins, des installations d'émission de signaux codés comprend un étage de détection qui possède une liaison aboutissant à un étage à basse fréquence et à amplification situé, sur le cicuit devant être accordé sur l'installation d'émission des programmes courants, en amont d'un ou plusieurs haut parleurs, cette liaison recevant un atténuateur intercalé comprenant un organe de réglage accessible à l'usager.

- Le plan ou carte routière est associé à un boitier qui contient des repères visuels tels que des organes d'éclairage correspondant aux endroits pré-déterminés d'une zone géographique donnée, le plan ou carte routière pouvant alors être inamovible par rapport au boîtier.

- Le plan ou carte routière est associé à un boîtier qui contient des repères visuels tels que des organes d'éclairage en nombre supérieur à celui qui est nécessaire pour représenter les endroits pré-déterminés d'une zone géographique donnée et ces repères visuels sont avantageusement disposés régulièrement en lignes et en colonnes, le plus près possible les uns des autres pour former une sorte de trame régulière, le plan ou carte routière pouvant alors être interchangeable avec d'autres identiques mais représentant des zones géographiques distinctes pour lesquelles les repères visuels utilisables sont différents.

L'invention sera mieux comprise par la description détaillée ci-après faite en référence au dessin annexé. Bien entendu, la description et le dessin ne sont donnés qu'à titre d'exemple indicatif et non limitatif.

La figure 1 est une vue schématique d'ensemble d'un dispositif conforme à l'invention.

La figure 2 est une vue schématique montrant un mode de réalisation particulier.

Les figures 3 et 4 sont deux schémas illustrant deux modes de réalisation différents de l'invention.

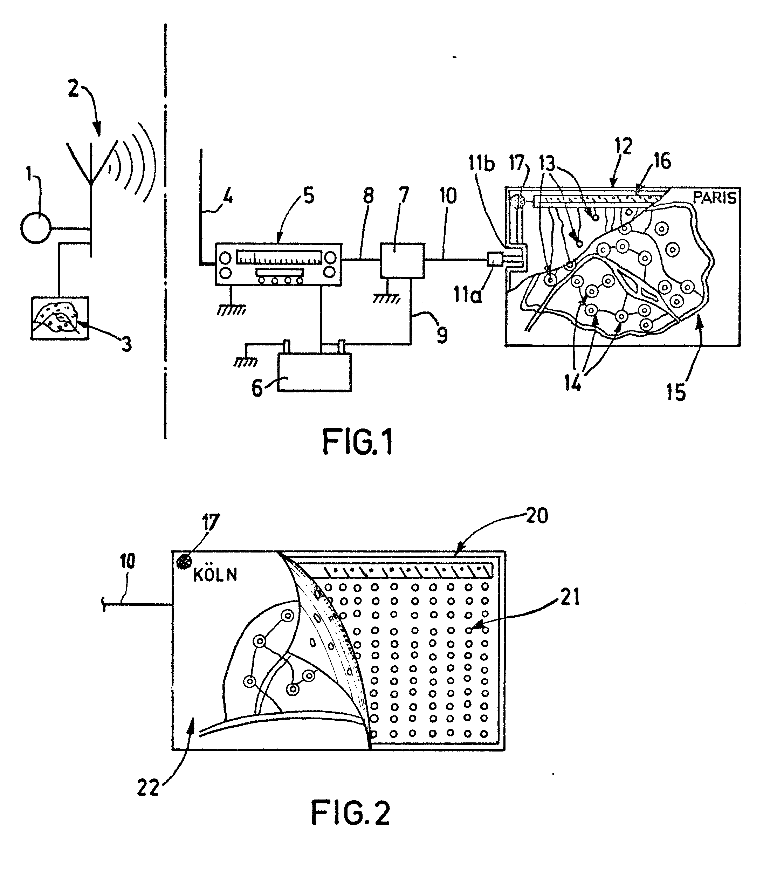

En se reportant à la figure 1, on voit qu'un dispositif comprend deux parties essentielles, l'une étant située dans la station émettrice et l'autre dans chaque véhicule intéressé lorsque le récepteur est un auto-radio.

La station émettrice comprend une installation d'émission classique 1 associée à une antenne 2, et conformément à l'invention, on associe soit directement à l'antenne 2, soit à l'installation 1 elle-même, un codeur 3 par lequel des informations humainement compréhensibles seront transformées en signaux radio émis par l'antenne 2 en superposition à l'émission radio audible existante.

Dans chaque véhicule, se trouve une antenne réceptrice 4 et un récepteur radio 5 alimenté à partir de la batterie habituelle 6.

Conformément à l'invention, le récepteur 5 est associé à un décodeur 7 par un câble 8, se décodeur 7 étant relié lui aussi à la batterie 6 par un conducteur 9.

Enfin, le décodeur 7 comprend un câble de sortie 10 terminé par une fiche 11a devant être engagée dans une prise 11b d'un boîtier 12.

Le boîtier 12 contient des organes d'éclairage 13 qui sont constitués, ici, par des diodes luminescentes et qui sont placés en regard de fenêtres 14 prévues dans un plan ou carte routière 15, ces fenêtres, et par conséquent ces organes d'éclairage 13, étant placés sensiblement selon la disposition relative réelle des endroits géographiques susceptibles d'être un lieu d'embarras de la circulation.

On remarque sur la figure 1 que le boîter 12 ne contient que les organes d'éclairage 13 correspondant aux endroits pré-déterminés d'une zone géographique donnée, le plan 15 pouvant alors être inamovible par rapport au boîtier 12.

Le fonctionnement de ce dispositif est le suivant :

La station d'émission émet son programme habituel exactement comme si l'invention n'était pas appliquée.

Mais, en plus du programme normal audible par l'oreille humaine grâce au récepteur 5, un opérateur agit sur le codeur 3 le moment venu pour émettre une séquence de signaux qui se superpose à l'émission normale de préférence selon des caractéristiques qui la rendent inaudible par l'oreille humaine, c'est-à-dire par l'auditeur du récepteur 5.

Lorsque cette séquence est captée par l'antenne 4, elle est transmise par le câble de raccordement 8 du décodeur 7 indépendamment de l'émission normale envoyée au haut parleur habituel.

Le décodeur 7 est conçu pour exciter sélectivement un seul des différents relais (non représentés) correspondant chacun à un organe d'éclairage 13 et associé à un interrupteur individuel 16.

Par suite, selon le code de la séquence reçue, l'un seulement des organes d'éclairage est allumé ou éteint.

En d'autres termes, à chaque organe d'éclairage 13 correspond un interrupteur individuel 16, un relai de commande et un code.

Naturellement, on peut imaginer qu'un code correspond, par exemple, à l'extinction de tous les organes d'éclairage en une seule fois.

Ainsi, à chaque instant, l'opérateur qui reçoit les informations concernant les encombrements de la circulation peut agir sur le codeur 3 pour afficher à distance, près de chaque récepteur, l'évènement qui vient de se produire et qui se traduit par l'allumage d'un organe 13 en regard d'une fenêtre 14, ce qui indique qu'il faut éviter l'endroit correspondant.

Tant que l'opérateur n'aura pas commandé à distance l'extinction de l'organe d'éclairage 13, celui-ci demeurera allumé et l'usager aura constamment à portée de regard l'ensemble des endroits libres ou encombrés d'une zone géographique donnée comme, par exemple, une grande ville telle que Paris, Cologne, etc...

Selon un mode de réalisation particulier et en particulier quand les signaux codés sont inaudibles, le dispositif comprend un organe de signalisation sonore électrique 17 susceptible d'être mis en action lors de l'allumage et/ou de l'extinction d'un ou plusieurs organes d'éclairage 13.

Avec ces dispositions, l'usager a son attention attirée par le signal sonore chaque fois qu'une modification intervient sur son tableau d'affichage.

Le codeur 3 peut comporter une représentation schématique analogue à celle du plan ou carte routière 15, auquel cas il est avantageux de prévoir une corrélation entre l'emplacement des organes d'éclairage 13 et l'emplacement des boutons de commandes du codeur 3.

Cela peut notamment être obtenu en plaçant des boutons lumineux aux mêmes endroits que les organes d'éclairage 23.

Mais cela peut, bien entendu, être aussi obtenu de manière différente.

En se reportant maintenant à la figure 2, on voit un mode de réalisation de l'invention selon lequel le boîtier 20 contient un nombre d'organes d'éclairage 21 supérieur à celui qui est nécessaire pour représenter les endroits pré-déterminés d'une zone géographique donnée, ces organes d'éclairage 21 étant avantageusement disposés régulièrement en lignes et en colonnes, le plus près possible les uns des autres pour former une sorte de trame régulière à points relativement serrés.

A chacun des organes d'éclairage 21 correspond un code des signaux radios et les organes électriques précédemment décrits.

Le boîtier 20 reçoit, comme précédemment, un plan ou carte routière 22 qui peut alors être interchangeable avec d'autres plans ou cartes routières identiques mais représentant des zones géographiques distinctes pour lesquelles les organes d'éclairage 21 utilisables sont différents.

Grâce à cela, l'usager du véhicule pourra placer sur le boîtier 20 celui des plans qui correspond à la zone dans laquelle il se trouve : plan de la ville, tronçon d'autoroute etc...

La station d'émission utilise sélectivement des ensembles d'organes d'éclairage 21 et des ensembles de codes de signaux radios qui font que ne peuvent être allumés que les organes d'éclairage 21 se trouvant en regard des fenêtres du plan ou carte routière correspondant, car il est bien évident que la disposition des fenêtres correspond à un site géographique donné qui ne coïncide généralement pas du tout avec un autre site géographique.

Sur la figure 2 on a représenté schématiquement le plan de la ville de Cologne et l'on comprend bien que les endroits susceptibles d'être encombrés dans cette ville

11                    0085013

ne sont pas distribués de la même manière que pour la ville de Paris dont on a représenté le plan sur la figure 1.

Le dispositif peut être complété par un sélecteur qui permet d'éliminer des signaux parasites lorsque le véhicule se trouve dans des zones de recouvrement et d'obtenir ainsi des signaux clairs et à jour pour des zones géographiques voisines telles que deux tronçons d'autoroute successifs ou deux villes peu éloignées l'une de l'autre telle que Cologne et Düsseldorf etc...

Afin que l'usager qui vient de mettre son récepteur en marche bénéficie le plus rapidement possible des informations visuelles, on peut prévoir que la station d'émission effectue une mise à jour générale et fréquente en envoyant autant de séquences de signaux codés qu'il y d'endroits à signaler à un moment donné.

Lorsqu'aucun endroit n'est encombré et afin d'éviter la confusion avec ce qui correspondrait à une panne du dispositif, on peut prévoir un voyant lumineux, par exemple vert, qui signifie que la circulation est fluide dans l'ensemble de la zone concernée.

Les organes d'éclairage 13 sont de préférence des diodes luminescentes en raison du faible volume qu'elles occupent et du peu d'échauffement qu'elles provoquent.

Mais, naturellement, on peut utiliser n'importe quel autre système connu et, notamment, un écran à cristaux liquides

Les fenêtres du plan ou de la carte routière peuvent être soit de simples trous, soit des zones transparentes etc...

Lorsqu'on utilise un écran à cristaux liquides, on peut remplacer le plan ou carte routière par un schéma créé électroniquement par tout moyen connu. Dans ce cas, bien évidemment, il n'y a plus de lampes devant des trous mais des repères visuels qui en sont des équivalents.

L'ensemble des fils de raccordement peut être masqué par une plaque servant de support aux organes d'éclairage.

Une plaque transparente en verre ou en matière synthétique peut recouvrir le tout et recevoir le plan ou carte routière amovible 22.

12

0085013

Au lieu de rendre amovible le plan 22 par rapport à une trame complète d'organes d'éclairage 21, on peut, comme représenté sur la figure 1, rendre le boitier 12 amovible par rapport au décodeur 7 grâce à l'ensemble fiche-prise 11. On peut aussi réaliser un ensemble indépendant comprenant le décodeur 7 et le boitier 13 afin de raccorder cet ensemble à un récepteur par un câble à fiche et prise standard.

Avec ces dispositions, l'usager peut se procurer autant de boitiers que cela lui convient et changer de boitier lorsqu'il change de ville ou de lieu.

Selon une autre variante, on peut prévoir une trame complète de contacts (obtenue, notamment, selon la technique des circuits imprimés) dans le boitier et relier des organes d'éclairage, sélectivment placés, au tableau portant le plan ou carte routière.

De la sorte, on associe au boitier unique des tableaux qui diffèrent selon les villes ou autres zones géographiques.

L'émission, quant à elle, peut être codée différemment selon les zones afin qu'un organe d'éclairage commun à deux ou plusieurs zones ne soit allumé ou éteint que pour la zone voulue.

Pour cela on peut par exemple donner un code à chaque point de la trame et faire précéder ce code de préfixes correspondant chacun à une seule zone.

On peut, par ailleurs, prévoir que le dispositif ne peut être mis en action que si et quand le sélecteur du poste récepteur correspond à une fréquence d'émission donnée.

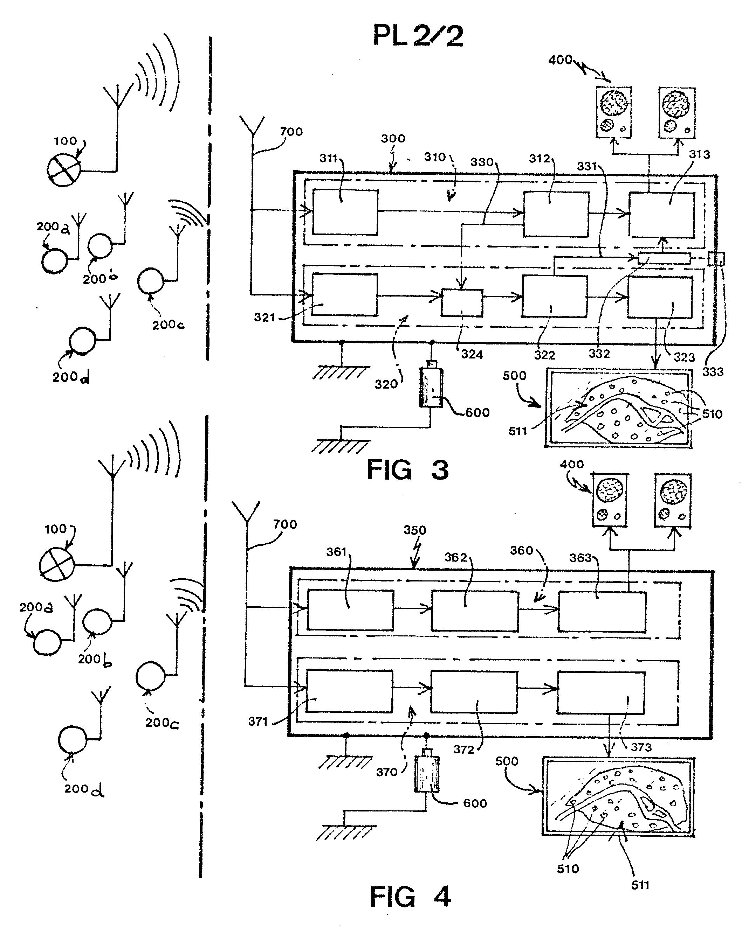

En se reportant maintenant à la figure 3, on voit un mode de réalisation de l'invention selon lequel on prévoit une installation 100 pour l'émission de programmes courants et au moins une installation distincte 200 (quatre sur le dessin) pour l'émission de signaux codés.

On peut ainsi disposer d'une station d'émission 100 existante à grande puissance, pour couvrir un territoire très étendu et, en particulier, plus grand qu'une seule zone géographique représentée sur l'écran d'affichage.

Pour animer différentes zones géographiques, correspondant chacune à une représentation sur un écran d'affichage, on utilise une installation locale 200a 200b, 200c etc.. dont la puissance peut être relativement petite et, en tous cas, nettement moins grande que celle de l'installation 100.

Avec une telle organisation, on bénéficie d'une grande souplesse d'installation et de fonctionnement et l'on évite toute gêne au niveau de l'installation d'émission 100.

En outre, chaque installation 200 ayant peu de puissance, sa portée est bien circonscrite à une zone limitée, de sorte qu'il ne se produit aucune interférence entre des zones mitoyennes.

L'installation 100 peut, par exemple, avoir une portée suffisante pour couvrir tout un pays, ou même plusieurs, tandis que les installations 200 sont implantées près des principales villes, avec une portée de quelques kilomètres seulement.

Les deux émissions ( de l'installation 100 et de l'une ou l'autre des installations 200 captée), sont toujours simultanées mais on peut choisir pour chacune des caractéristiques très différentes, évitant des interférences possibles.

Chaque ensemble comprend un récepteur radio proprement dit 300, un ou plusieurs haut-parleurs 400 et un écran d'affichage 500.

Cet ensemble doit être relié à une source d'énergie qui peut être la batterie d'un véhicule si l'ensemble est du genre "auto-radio" ou des piles si l'ensemble est un récepteur portatif du genre "transistor". On a schématisé cela, sur la figure 3 par une pile 600.

Pour capter les deux émissions, on prévoit soit deux antennes distinctes, soit une seule 700 comme représenté.

Le récepteur 300 comporte deux circuits distincts 310 et 320 accordés respectivement sur l'installation d'émission 100 et sur les installations d'émission 200 qui émettent toutes sur la même fréquence.

Ainsi, en tout point d'un territoire donné, chaque récepteur 300 capte l'émission de l'installation 100 et l'émission d'une seule des installations 200 car, comme dit plus haut, la portée des installations 200 est faible pour n'avoir d'effet que localement.

Si l'ensemble est monté sur un véhicule circulant en France, le conducteur capte en permanence la station 100 et, par exemple, la station 200a de Marseille qui lui communique la situation du trafic local, puis la station 200b de Lyon, puis la station 200c de Paris etc...

Le circuit 310 est d'un type bien connu de l'homme de métier et on ne le décrit donc pas en détail. Il comprend un circuit à haute fréquence ("HF") 311, un étage de détection 312 et un circuit à basse fréquence ("BF") à amplificateur 313 qui alimente l'ensemble haut-parleur 400.

L'étage de détection 312 est ici du type réglable, c'est à dire que l'usager peut sélectionner les stations de son choix : la station 100 et n'importe quelle autre station existante.

Le circuit 320 est spécifique aux émissions codées mais est lui aussi d'un type bien connu de l'homme de métier. Il comprend un circuit HF 321, un étage de détection 322 et un circuit à amplificateur 323 qui alimente l'écran d'affichage 500.

On remarque la présence d'une "porte" 324 intercalée entre le circuit HF 321 et l'étage de détection 322. Cette porte 324 est associée à l'étage de détection 312 par une liaison 330.

Ces dispositions ont pour but de contrôler le circuit 320 afin qu'il soit actif quand l'étage de détection 312 est accordé sur la fréquence de la station 100, tandis qu'il est neutralisé quand l'étage de détection 312 est accordé sur une fréquence autre que celle de la station 100.

En effet, dans le premier cas l'étage 312 agit sur la porte 324 par la liaison 330 afin que cette porte 324 soit "ouverte", c'est-à-dire qu'elle établisse la liaison entre le circuit HF 321 et l'étage de détection 322. Dans le second cas, l'étage 312 agit sur la porte 324 par la liaison 330 afin que cette porte 324 soit "fermée", c'est-à-dire qu'elle interrompe la liaison entre le circuit HF 321 et l'étage de détection 322.

Ainsi, lorsque l'usager sélectionne la fréquence de la station 100, il peut bénéficier des informations codées qui proviennent des stations 200 et qui, par le circuit 320, animent l'écran d'affichage 500 en actionnant les repères visuels 510 voulus, selon les mêmes modalités que celles qui ont été décrites en regard de la figure 1.

Naturellement, on peut délibérément supprimer la porte 324 et la liaison 330 de sorte que le circuit 320 est toujours actif, quelle que soit la fréquence choisie par l'usager pour l'émission de programmes sonores courants.

La porte 324 peut être constituée par tout dispositif connu et, notamment par une diode.

Les repères visuels 510 peuvent être des organes d'éclairage, comme décrit ci-dessus, ou des repères du type à cristaux liquides par exemple.

L'écran d'affichage 500 peut être du même type que ceux décrits ci-dessus en regard des figures 1 et 2. Il peut aussi être du type à cristaux liquides ou même être constitué par un tube cathodique auquel cas les repères visuels 510 sont des spots lumineux (ou des "points noirs" par analogie avec la désignation populaire des endroits souvent encombrés).

Un tel système est plus coûteux que les précédents, mais il est aussi plus performant car il permet de constituer électroniquement le contour de la zone géographique concernée (plan ou carte routière 511) et, cela, automatiquement selon la station 200 captée, sans intervention de l'usager. Il permet aussi l'affichage de messages, schémas et informations visuelles de toutes sortes, le cas échéant coordonnés avec l'émission de la station 100 qui se traduit, elle, par des sons diffusés par le(s) haut-parleur(s) 400.

On peut vouloir traduire en sons les messages codés, reçus par le circuit 320, notamment pour attirer l'attention de l'usager lors de la survenance d'une information nouvelle sur l'écran d'affichage 500 (apparition ou disparition d'un ou plusieurs repères visuels).

On établit alors une liaison 331 entre le circuit de de détection 322 et le circuit BF à amplificateur 313. Ici, on a intercalé un atténuateur 332 comprenant un bouton de réglage 333 placé à l'extérieur du récepteur 300 pour permettre à l'usager de régler le volume du son émis par le(s) haut-parleur(s) 400 entre 0 (interruption totale) et un maximum pré-établi.

Naturellement, ces sons se superposent à l'émission de programmes sonores courants.

En se reportant maintenant à la figure 4, on voit un récepteur 350 d'un type un peu différent du précédent.

Il comporte deux circuits 360 et 370. Le circuit 360 correspond à l'émission de programmes sonores courants. Il comprend un circuit HF 361, un étage de détection 362 et un circuit BF à amplificateur 363.

L'étage de détection 362 est, ici, du type non réglable, c'est-à-dire qu'il est accordé une fois pour toutes, par construction, à la fréquence de la station 100.

L'usager n'a donc pas le choix de son écoute mais, en revanche, il bénéficie automatiquement des émissions codées.

Pour cela, le second circuit 370 comprend un circuit HF 371, un étage de détection 372 et un circuit à amplificateur 373.

La présence d'une porte sur le second circuit 370 n'est plus utile.

On n'a pas prévu, ici, de liaison entre le circuit BF et l'étage de détection 372 mais on peut aussi l'adopter avec ce mode de réalisation, comme on pourrait le supprimer de celui représenté sur la figure 3.

L'ensemble qu'illustre la figure 4 est d'une réalisation très simple et peut être recommandé pour réaliser un petit ensemble portatif, avec lequel il est possible de connaître l'état du trafic avant de sortir de chez soi ou de son lieu de travail, non seulement pour éviter tel ou tel endroit encombré,mais aussi pour choisir le moment de son départ hors des heures de pointe.

Quel que soit le mode de réalisation choisi, on peut toujours prévoir, par tout moyen connu de l'homme de métier, une interruption du circuit des émissions codées (effacement des repères visuels) quand le niveau sonore des émissions en clair atteint une valeur minimum (valeur plancher) préétablie.

L'homme de métier peut apporter des modifications aux exemples de réalisation ci-dessus, en fonction de choix pratiques.

L'usage d'un micro-processeur peut, par exemple, procurer des avantages de précision et de rapidité pour l'affichage.

Les différentes parties d'un ensemble peuvent être diversement organisées :

- connexion des parties spécifiques (décodeur-écran d'affichage ) à un récepteur existant (les informations codées peuvent s'entendre sous forme de "bips" en superposition au programme sonore courant);

- réalisation d'un ensemble indissociable récepteur-haut parleur-écran d'affichage;

- réalisation d'une "chaîne" : récepteur fixé au tableau de bord d'un véhicule, hauts(s)-parleur(s) placé(s) ailleurs, écran d'affichage fixé au pavillon (ou au pare-soleil du conducteur) etc...;

- réalisation d'un ensemble simplifié très compact et portatif (modèle "de poche" plat avec réception d'une unique station d'émission de programmes courants;

- mise en place de grands écrans d'affichage dans des lieux publics, à l'extérieur d'autobus ou dans des magasins;

- etc...

Le nombre d'installations 200 peut être quelconque, y compris égal à un. En effet, au lieu de répartir plusieurs installations 200 à faible portée, on peut aussi n'en prévoir qu'une seule de portée équivalente à celle de de la station 100. L'unique station 200, doit alors correspondre à plusieurs zones géographiques qu'il faut différencier.

Comme indiqué plus haut, cela peut être obtenu en prévoyant un code "Clef", ou indicatif, correspondant chacun à une zone et émis en préfixe du code de chaque repère visuel. Ainsi par exemple, le repère visuel "R7" qui est commun, par hypothèse, à plusieurs zones géographiques, apparaît pour Marseille quand il est précédé de l'indicatif de cette ville "A" mais n'apparaît pas pour les autrez zones. Il en est ainsi pour chacun des repères visuels "R1" à "$R_N$", supposés communs à plusieurs zones, et qui apparaissent ou disparaissent individuellement pour chaque zone selon l'émission de l'indicatif de zone "A" à "N".

L'unique station 200 peut avoir son propre émetteur ou peut être combinée avec l'émetteur de la station 100. Les caractéristiques des deux émissions simultanées (fréquence, modulation, etc...) peuvent être plus librement choisies en différenciant les stations 100 et 200 qu'en utilisant l'émission de la station 100 comme porteuse des codes destinés à l'écran d'affichage.

1

REVENDICATIONS

1 - Procédé de communication radio entre au moins une station émettrice (1-100) et une pluralité de récepteurs (5-300-350) du type selon lequel, pour signaler des embarras de la circulation existant à un certain moment dans une zone géographique donnée, on prédétermine des endroits de cette zone susceptibles d'être particulièrement perturbés, on fait correspondre à ces endroits des repères visuels , et notamment des organes d'éclairage (13-21-510) tels que des diodes luminescentes , on ordonne ces repères sensiblement selon la disposition relative réelle de ces endroits et on les expose ainsi sélectivment à l'observation d'un usager, au voisinage de chaque récepteur (5-300-350), on combine ces repères avec une représentation en plan (15-22-54) de ladite zone permettant à l'usager d'observer les repères visuels (13-21-510) quand il sont sélectivement exposés et caractérisé en ce que l'on expose et l'on efface sélectivement chacun de ces repères visuels (13-21-510) au moyen d'organes de commande individuels (16) actionnés directement à partir de signaux radio qui sont émis par une station (1-200) en simultanéité avec une émission radio émettant des programmes courants audibles, signaux qui sont codés en séquences correspondant chacune à l'actionnement d'un organe de commande (16) pour, soit exposer, soit effacer un repère visuel donné et qui sont émis, de préférence, selon des caractéristiques qui les rendent inaudibles par l'oreille humaine, en adjonction à l'émission radio courante qui, elle, est audible au moyen d'un récepteur radio (5-300-350).

2 - Procédé selon la revendication 1, caractérisé en ce que l'on émet des programmmes courants audibles à partir d' au moins un émetteur et que l'on émet les signaux codés à partir d'un ou plusieurs autres émetteurs (200) pouvant être localisés diversement selon leur puissance individuelle.

0085013

3 - Dispositif pour la mise en oeuvre du procédé de la revendication 1, caractérisé en ce qu'il comprend au moins une installation (1) pour l'émission de programmes courants et au moins un codeur (3) de signaux radio associé à l'installation (1).

4 - Dispositif selon la revendication 3, caractérisé en ce qu'il comprend une pluralité d'ensembles composés chacun, d'une première part d'un récepteur radio (5), d'une deuxième part d'un écran d'affichage (15-22) pour des repères visuels (13-21) qui doivent être reliés chacun à une source d'énergie (6), qui sont associés à des organes de commande individuels (16) et qui sont combinés à un plan ou carte routière (15-22) et, d'une troisième part, d'un décodeur (7) des signaux radio relié au récepteur (5), soit par un câble de raccordement (8), auquel cas le recepteur (5) peut être standard tel qu'un récepteur portatif, un auto-radio et analogue, soit par intégration dans un ensemble unitaire récepteur-décodeur.

5 - Dispositif pour la mise en oeuvre du procédé de la revendication 2, caractérisé en ce qu'il comprend au moins une installation (100) pour l'émission de programmes courants et au moins une installation (200) pour l'émission de signaux codés.

6 - Dispositif selon la revendication 5, caractérisé en ce qu'il comprend une pluralité d'ensembles composés chacun, d'une part d'un récepteur-radio (300-350) et, d'autre part d'un écran d'affichage (500) pour des repères visuels (510) qui doivent être reliés chacun à une source d'énergie (600), qui sont associés à des organes de commande individuels et qui sont combinés à un plan ou carte routière (511), le récepteur radio (300-350) comportant deux circuits distincts (310 et 320 - 360 et 370) devant être accordés respectivement sur l'installation d'émission (100) de programmes courants et sur l'installation ou les installations d'émission (200) de signaux codés.

7 - Dispositif selon la revendication 6, caractérisé en ce que le circuit (360) devant être accordé sur l'installation (100) d'émission des programmes courants est accordé une fois pour toute sur l'unique fréquence d'émission de ladite installation (100).

8 - Dispositif selon la revendication 6, caractérisé en ce que le circuit (310) devant être accordé sur l'installation (100) d'émission de programmes courants comprend un étage de détection (312) de type réglable permettant la réception d'émissions de diverses fréquences.

9 - Dispositif selon la revendication 8, caractérisé en ce que l'étage de détection réglable (312) possède une liaison (330) avec une "porte" intercalée sur le circuit (320) devant être accordé sur l'installation ou sur les installations (200) d'émission de signaux codés, entre un étage de réception (321) et un étage de détection (322) afin que la "porte" (324) ne soit"ouverte", c'est à dire conductrice vers l'étage de détection (322) que si et quand l'étage de détection réglable (312) est accordé sur la fréquence de l'installation (100) d'émission de programmes courants, cette même porte (324) étant au contraire "fermée", c'est-à-dire non conductrice, quand l'étage de détection réglable (312) est accordé sur une fréquence autre que celle de l'installation (100) d'émision de programmes courants.

10 - Dispositif selon la revendication 6, caractérisé en ce que le circuit (320) devant être accordé sur l'installation ou sur les installations (200) d'émission de signaux codés comprend un étage de détection (322) qui possède une liaison (331) aboutissant à un étage à basse fréquence et à amplification (313) situé, sur le circuit (310) devant être accordé sur l'installation (100) d'émission de programmes courants en amont d'un ou plusieurs haut-parleurs (400), cette liaison (331) recevant un atténuateur intercalé (332) comprenant un organe de réglage (333) accessible à l'usager.

11 - Dispositif selon l'une quelconque des revendications 4 ou 6 caractérisé en ce que le plan ou carte routière (15) est associé à un boîtier (12) qui contient des repères visuels tels que des organes d'éclairage (13) correspondant aux endroits pré-déterminés d'un zone géographique donnée, le plan ou carte routière (15) pouvant alors être inamovible par rapport au boîtier (12).

12 - Dispositif selon l'une quelconque des revendications 4 ou 6, caractérisé en ce que le plan ou carte routière (22) est associé à un boîtier (20) qui contient des repères visuels tels que des organes d'éclairage (21) en nombre supérieur à celui qui est nécessaire pour représenter les endroits pré-déterminés d'une zone géographique donnée et en ce que ces repères visuels sont avantageusement disposés régulièrement en lignes et en colonnes, le plus près possible les uns des autres pour former une sorte de trame régulière, le plan ou carte routière (22) pouvant alors être interchangeable avec d'autres identiques mais représentant des zones géographiques distinctes pour lesquelles les repères visuels utilisables sont différents.

PL 1/2

0085013

FIG.1

FIG.2

FIG 3

FIG 4

**Office européen des brevets**

**RAPPORT DE RECHERCHE EUROPEENNE**

Numéro de la demande

EP  83  40  0179

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl. 3) |
|---|---|---|---|
| D,Y | DE-A-2 326 199  (KLUGE)  *En entier* | 1-6,8, 11-12 | G 08 G    1/09 |
| D,Y | GB-A-2 050 767 (BLAUPUNKT-WERKE) *En entier* | 1-6,8, 11 | |
| D,Y | EP-A-0 034 993  (DAHAN et al.) *Page 1, lignes 1-5; page 2, lignes 13-23; page 4, lignes 1-7; figures 5a-c,9* | 12 | |
| D,A | DE-A-3 022 761  (H.HERTZ INST. FUER NACHRICHTENTECHNIK) *Revendication 7* | 10 | |

DOMAINES TECHNIQUES RECHERCHES (Int. Cl. 3)

G 08 G

Le présent rapport de recherche a été établi pour toutes les revendications

| Lieu de la recherche | Date d'achèvement de la recherche | Examinateur |
|---|---|---|
| LA HAYE | 29-04-1983 | BEINDORFF W.H. |

OEB Form 1503 03 82